# EUROPEAN PATENT SPECIFICATION

(11) **EP 1 754 348 B1**
(45) Date of publication and mention of the grant of the patent: **01.08.2012**
(21) Application number: 05778923.2
(22) Date of filing: 18.05.2005
(51) Int. Cl.: H04L 29/06

(54) **USING ADDRESS RANGES TO DETECT MALICIOUS ACTIVITY**
VERWENDUNG VON ADRESSBEREICHEN ZUR ERKENNUNG VON BÖSARTIGEN AKTIVITÄTEN
UTILISATION DE PLAGES D'ADRESSAGE POUR DETECTER TOUTE ACTIVITE MALVEILLANTE

(30) Priority: 19.05.2004 US 572658 P
(43) Date of publication of application: 21.02.2007
(73) Proprietor: Computer Associates Think, Inc., Islandia, NY 11749 (US)
(72) Inventor: GASSOWAY, Paul, Norwood, MA 02062 (US)
(74) Representative: Dunlop, Hugh Christopher
(86) International application number: PCT/US2005/017685
(87) International publication number: WO 2005/117370

(56) References cited:
- WO-A-03/050644
- YING JIN, STEVEN WALLACE: "A Preprocessor Plugin for SNORT: IP Spoof Detector" INTERNET PUBLICATION, [Online] 22 April 2002 (2002-04-22), XP002355057 Advanced Network Management Lab, Indiana University Retrieved from the Internet: URL:http://www.cs.indiana.edu/~yinjin/anml /Automatic_Spoof_Detector_Ying.doc> [retrieved on 2005-11-17]
- CISCO SYSTEMS: "SAFE: Worm Mitigation" CISCO SYSTEMS WHITE PAPER, [Online] 2003, XP002355058 Retrieved from the Internet: URL:http://www.cisco.com/warp/public/cc/so /neso/sqso/safr/prodlit/sawrm_wp.pdf> [retrieved on 2005-11-18]

## Description

### BACKGROUND

### Reference to Related Application

The present disclosure is based on and claims the benefit of Provisional Application Serial No. 60/572,658 filed May 19, 2004, the entire contents of which are herein incorporated by reference.

### TECHNICAL FIELD

The present disclosure relates to detecting malicious activity and, more specifically, to using address ranges to detect malicious activity.

### DESCRIPTION OF THE RELATED ART

In todays highly computer dependant environment, computer security is a major concern. The security of computer networks is routinely threatened by computer viruses, Trojan horses, worms and the like. Once computer networks have been infected with these malicious programs, the malicious programs may have the ability to damage expensive computer hardware, destroy valuable data, tie up limited computing resources or compromise the security of sensitive information.

Worms can be particularly catastrophic forms of malicious programs. Worms can infect a computer network and quickly commandeer network resources to aid in the worms further propagation. In many cases malicious code, for example worms, propagate so rapidly that network bandwidth can become nearly fully consumed threatening the proper function of critical applications.

After a worm has infected computers and computer networks a destructive payload can then be delivered. Destructive payloads can have many harmful consequences, for example, valuable hardware and/or data can be destroyed, sensitive information can be compromised and network security measures can be circumvented.

To guard against the risk of malicious programs such as worms, businesses may often employ antivirus programs, intrusion detection systems and intrusion protection systems. Antivirus programs are generally computer programs that can be used to scan computer systems to detect malicious computer code embedded within infected computer files. Malicious code can then be removed from infected files, the infected files may be quarantined or the infected file may be deleted from the computer system. Intrusion detection systems and intrusion protection systems (IDSs) are generally systems that can be implemented on a computer network to monitor the computer network to detect anomalous traffic that can be indicative of a potential problem, for example a worn infection. IDSs may be either active or passive. Active IDSs may take affirmative measures to remedy a potential infection when found while passive IDSs may be used to alert a network administrator of the potential problem.

IDSs often attempt to identify the presence of network infection by analyzing packets of data that are communicated over the network. Antivirus programs often attempt to identify the presence of infection by analyzing files and memory locations of a specific computer. Packets, files and memory locations are generally examined and compared with signatures of known malicious programs. When a signature matches a packet, file or memory location, a malicious program infection may have been detected.

IDSs and antivirus programs that rely on signatures for the detection of malicious programs must regularly receive and install updated signatures corresponding to any newly discovered malicious programs. If no signature has been received and installed for a particular malicious program, the IDS or antivirus program might not be able to identify the malicious program.

Modem malicious programs such as worms can often spread very quickly from computer to computer and from computer network to computer network throughout the world. Unfortunately, they can spread so quickly that they can infect many networks before a signature for detecting the malicious program can be developed, distributed and installed.

It is desired that a method and system be used that can detect the propagation of malicious programs even before a suitable signature can be obtained to combat the malicious program.

"A Preprocessor Plugin for SNORT: IP Spoof Detector" by Ying Jin and Steven Wallace, published on 22 April 2002, describes a pre-processor plugin, Spp_spoofwatch, for a network intrusion detection system, SNORT. Spp_spoofwatch relies on a premise that Distributed Denial of Service zombies that spoof IP source addresses do not answer Address Resolution Protocol requests for their spoofed addresses.

Cisco system white paper "SAFE: Worm Mitigation" describes a technique for worm mitigation by means of "containment", "inoculation", "quarantine", "treatment", etc. This technique utilizes Egress filtering to prevent local hosts' from initiating outbound connections.

WO 03/050644 describes a technique for screening packet-based communication traffic. According to this technique, the destination addresses of packets are analysed by checking whether they are within ranges of non-existing or well-known unused addresses e.g. segments of IP addresses that are reserved for testing or multicasting. If they are, then the associated packets are considered likely to be worm generated

### SUMMARY

In accordance with one aspect of the invention, there is provided a method for detecting malicious programs within a network as set out in claim 1.

In accordance with another aspect of the invention, there is provided a system for detecting malicious programs within a network as set out in claim 6, and a correspondent computer recording medium as set out in claim 11.

A method for detecting malicious programs within a network, includes monitoring at least one packet within the network to ascertain a source address and a destination address of the at least one packet, determining whether the source address and the destination address of the at least one packet match addresses within a listing of addresses of devices on the network and generating an alert when neither the source address not the destination address of the at least one packet match addresses within the listing of addresses of devices on the network.

A system for detecting malicious programs within a network, the system including a monitoring unit for monitoring at least one packet within the network to ascertain a source address and a destination address of the at least one packet, a determining unit for determining whether the source address and the destination address of the at least one packet match addresses within a listing of addresses of devices on the network and a generating unit for generating an alert when neither the source address nor the destination address of the at least one packet match addresses within the listing of addresses of devices on the network.

A computer system includes a processor and a computer recording medium including computer executable code executable by the processor for detecting malicious programs within a network. The computer executable code includes code for monitoring at least one packet within the network to ascertain a source address and a destination address of the at least one packet, code for determining whether the source address and the destination address of the at least one packet match addresses within a listing of addresses of devices on the network and code for generating an alert when neither the source address nor the destination address of the at least one packet match addresses within the listing of addresses of devices on the network.

A computer recording medium including computer executable code executable by a processor for detecting malicious programs within a network, the computer executable code including code for monitoring at least one packet within the network to ascertain a source address and a destination address of the at least one packet, code for determining whether the source address and the destination address of the at least one packet match addresses within a listing of addresses of devices on the network and code for generating an alert when neither the source address nor the destination address of the at least one packet match addresses within the listing of addresses of devices on the network.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 shows a computer network for describing embodiments of the present disclosure;
FIG. 2 shows a flow chart for describing embodiments of the present disclosure; and
FIG. 3 shows an example of a computer system capable of implementing the method and apparatus according to embodiments of the present disclosure.

### DETAILED DESCRIPTION

The present disclosure provides tools (in the form of methodologies, apparatuses, and systems) for detecting malicious activity. The tools may be embodied in one or more computer programs stored on a computer readable medium or program storage device and/or transmitted via a computer network or other transmission medium.

In describing the preferred embodiments of the present disclosure illustrated in the drawings, specific terminology is employed for sake of clarity. However, the present disclosure is not intended to be limited to the specific terminology so selected, and it is to be understood that each specific element includes all technical equivalents which operate in a similar manner.

Computer networks often use a set of communications protocols to define how information is communicated within the network. A common example of a set of communications protocols used is the Transmission Control Protocol/Internet Protocol (TCP/IP) set of communications protocols. Many sets of communications protocols, for example TCP/IP, communicate data along the computer network by breaking up data into discrete units of data called packets and communicating each packet individually.

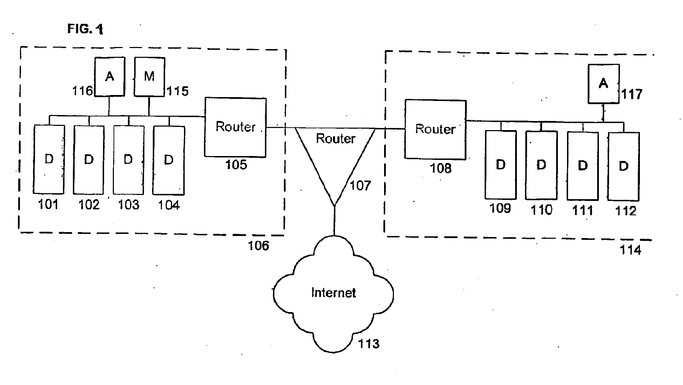

An example of a computer network according to an embodiment of the present disclosure is shown in Fig. 1. Computer networks are generally formed by combining one or more subnets 106, 114. A subnet 106, 114 is generally an isolated network segment wherein all network devices 101-104, 109-112, for example computers, that are connected to the subnet, may be free to communicate with one another via a network connecting device such as a router 105, 107, 108.

Fig. 1 shows a first subnet 106 that is comprised of four network devices 101-104 that may be, for example, computers connected to the network. A router 105 connects the network devices 101-104 to each other and to the rest of the network thereby defining the subnet 106. A second subnet 114 is also shown. The second subnet is comprised of another four network devices 109-112 connected by a second router 108. A third router 107 connects each subnet to each other and connects the computer network to the internet 113.

Each device 101-104, 109-112 on the network has its own unique address. When communicating packets according to TCP/IP, for example, these addresses can be IP addresses. Addresses are generally unique for the entire computer network, and when the computer network is connected to the internet, network addresses are generally globally unique. A network address for a particular device 101-104, 109-112 may contain a number unique to the computer network (network number), a number unique to the subnet 106, 114 of origin within the network (subnet address) and a number unique for the device 101-104,109-112 within the subnet (host number).

Because network addresses are often expressed hierarchically, starting with the network number, the network addresses for particular devices 101-104, 109-112 within a particular subnet 106, 114 often fall within a particular range of internet addresses. Therefore a listing of internet addresses for devices 101-104, 109-112 located within the network can take the form of a range of internet addresses.

In the communication of packets across the network, network devices 101-104, 109-112 can send and receive packets. Packets formed pursuant to sets of communications protocols, for example TCP/IP, generally include addressing information that helps the packets get to their desired destination. Addressing information generally includes a source address indicating the address of the device 101-104, 109-112 from which the packet originated and a destination address indicating the address of the device 101-104, 109-112 to which the packet is to be delivered.

Addressing information is generally included in a packet header. A packet header is generally a portion of the packet that includes addressing information along with various other procedural data, for example, error checking data. The substantive data of the packet is generally stored in the packet's body. The header tends to be much smaller than the packet's body.

Network connection devices, for example routers 105, 107, 108, can be responsible for routing packets from their source to their destination. The determination of how to rout packets is usually made by each network connection device the packet is communicated through. This determination is generally made by choosing the optimal path for the given packet at that current moment. It is therefore possible that multiple packets relating to the same communication can be routed along different paths before they separately arrive at their destination where they can be recombined.

For example, a packet originating from device 101 with a destination of device 103 may be sent to router 105 where it may then be routed directly to device 103. A packet originating from a device beyond the network over the internet 113 with a destination of device 110 may be routed through the router 107, the router 107 will rout the packet to router 108 and router 108 will rout the packet to device 110.

Because subnets 106, 114 are generally isolated from the rest of the network and from the internet 113 by routers 105, 107, 108, in general, all packets that can be located within a subnet 106, 114 either originated from a device 101-104, 109-112 within that subnet 106, 114 or a device 101-104, 109-112 within that subnet 106, 114 is the destination. Therefore, in general, all packets that can be located within a subnet 106, 114 either contain an address for a device within that subnet 106, 114 as a source address or a destination address.

Malicious programs, for example worms, often propagate by sending packets infected with the malicious program to other devices 101-104, 109-112 within the network or to locations beyond the network over the internet 113. These malicious programs often send packets to random addresses with the intention of spreading as widely as possible.

In an attempt to make it more difficult to trace the origin of the propagation of malicious programs, malicious programs often attempt to hide the source address of packets that are used by the malicious program to propagate. This can be accomplished by inserting false source addresses into the packets. As a result, packets with false source addresses are almost never legitimate and are frequently created by malicious programs attempting to propagate.

While in general, all packets that can be located within a subnet 106, 114 either contain an address for a device within that subnet 106, 114 as a source address or a destination address, packets that have been generated by a device 101-104, 108-112 within the subnet 106, 114 by a malicious program attempting to propagate may have neither a source address nor a destination aggress belonging to that subnet 106, 114.

For example, device 109 within subnet 114 might be infected with a malicious program. This device 109 might then attempt to propagate by generating multiple packets containing the malicious program and addressing these packets to random destinations. In an attempt to hide the source of these packets, the malicious program might falsify the source address of the packets. As a result, packets can be detected on the subnet 114 that have neither a destination address nor a source address of a device 109-112 on the subnet 114.

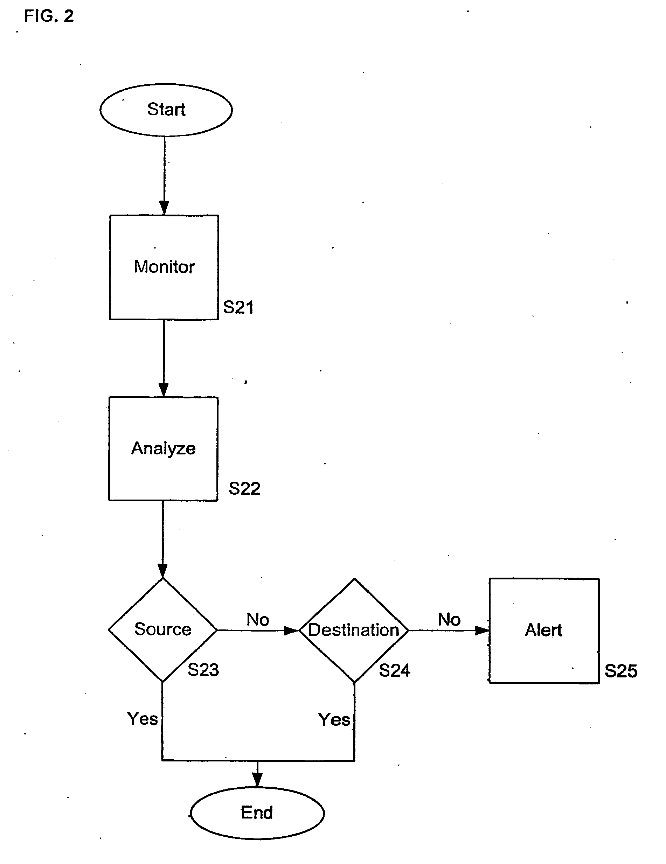

An embodiment of the present disclosure is illustrated in Fig. 2. Network traffic .may be monitored within each subnet 106, 114 (Step S21). Monitoring of network packets may be accomplished, for example, by adding an agent device 116, 117 to each subnet 106, 114 respectively. The agents 106, 114 are capable of monitoring packets that are transmitted within the subnet 106, 114 that the given agent 116, 117 may be monitoring. Some embodiments of the present disclosure utilize agents 106, 114 that can limit packet monitoring to the headers of the packets being monitored. Monitoring only packet header information allows for much quicker and less resource intensive packet monitoring than embodiments that monitor the body of packets as well. In Fig. 1, agent 116 monitors packet headers transmitted over subnet 106 and agent 117 monitors packet headers transmitted over subnet 114.

Monitored packet headers can then be analyzed (Step S22), for example the source address and destination address can be read. This can be accomplished, for example, by the use of a master 115. The master 115 is generally a system on the network that may be capable of comparing the source and destination addresses with a list or range of addresses corresponding to locations on the network. According to embodiments of the present disclosure making use of a master 115, the agents 116, 117 report collected packet header information, for example, packet source and destination addresses, to the master 115 for analysis. According to other embodiments of the present disclosure, the agents 116 and 117 can function independently and perform the analysis themselves (Step S22).

Next, the source address of the packet header may be compared to the list or range of addresses within the subnet 106, 114 where the packet was found (Step S23). If the source address matches an address for a device 101-104, 109-112 within the subnet 106, 114, (Yes Step S23) it can be assumed that the packet maybe a legitimate packet originating from a device 101-104, 109-112 within the subnet 106, 114. If the source address of the packet does not match an address for a device 101-104, 109-112 within the subnet 106, 114, (No Step S23), the destination address of the packet may be compared to the list or range of addresses within the subnet 106, 114 where the packet was found (Step S24). If the destination address matches an address for a device 101-104, 109-112 within the subnet 106, 114, it can be assumed that the packet may be a legitimate packet intended for a device 101-104, 109-112 within the subnet 106, 114. If neither then destination address nor the source address of a packet addresses a device 101-104, 109-112 within the subnet 106, 114 (No Step S24), it can be assumed that the packet was generated by a malicious program that has infected a device 101-104, 109-112 within the subnet 106, 114 and has falsified the source address. Such instances will trigger an alert (Step S25) so the network administrator can become aware of the potential malicious program infection and can then investigate and/or take remedial measures.

The order of performance of comparing the source address (Step S23) and comparing destination address (Step S24) may not be of consequence. Embodiments of the present disclosure can perform these steps in any order. Embodiments of the present disclosure will generate the alert when neither the destination address nor the source address of a packet addresses a device 101-104, 109-112 within the subnet 106, 114 (No Steps S23, S24) as ascertained, for example, by comparing the addresses from the packet header with the list or range of addresses corresponding to locations on the network.

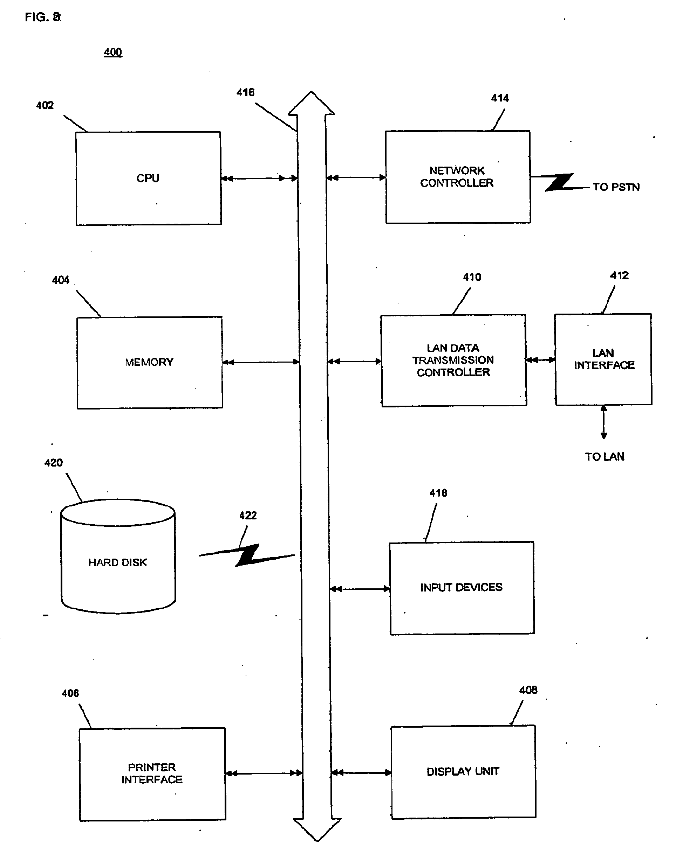

Fig. 3 shows an example of a computer system which may implement the method and system of the present disclosure. The system and method of the present disclosure may be implemented in the form of a software application running on a computer system, for example, a mainframe, personal computer (PC), handheld computer, server, etc. The software application may be stored on a recording media locally accessible by the computer system and accessible via a hard wired or wireless connection to a network, for example, a local area network, or the Internet.

The computer system referred to generally as system 400 may include, for example, a central processing unit (CPU) 402, random access memory (RAM) 404, a printer interface 406, a display unit 408, a local area network (LAN) data transmission controller 410, a LAN interface 412, a network controller 414, an internal buss 416, and one or more input devices 418, for example, a keyboard, mouse etc. As shown, the system 400 may be connected to a data storage device, for example, a hard disk, 420 via a link 422.

Numerous additional modifications and variations of the present disclosure are possible in view of the above-teachings. It is therefore to be understood that within the scope of the appended claims, the present disclosure may be practiced other than as specifically described herein. For example, elements and/or features of different illustrative embodiments may be combined with each other and/or substituted for each other within the scope of this disclosure and appended claims.

## Claims

1. A method for detecting malicious programs within a network (106, 114), comprising monitoring at least one packet within said network (106, 114) to ascertain a source address and a destination address of said at least one packet,
**characterized by**:
determining whether said source address and said destination address of said at least one packet match addresses within a listing of addresses of devices on said network (106, 114); and
generating a malicious program detection alert upon determining that neither said source address nor said destination address of said at least one packet matches an address within said listing of addresses of devices on said network (106, 114).

2. The method of claim 1, wherein said listing of addresses of devices on said network (106, 114) is comprised of a range of addresses of devices (101-104, 109-112) on said network (106, 114).

3. The method of claim 1, wherein monitoring said at least one packet within said network (106, 114) comprises using one or more agents (116, 117) to collect header information from said at least one packet within said network (106,114).

4. The method of claim 3, wherein one or more agents (116, 117) are used in one or more network subnets (106, 114) where packets are monitored, and wherein one of said one or more agents (116, 117) is used in each one of said one or more network subnets (106, 114) where packets are monitored.

5. The method of claim 3, wherein said one or more agents (116, 117) send collected header information to a master (115).

6. A system for detecting malicious programs within a network (106, 114), the system comprising a monitoring unit for monitoring at least one packet within said network (106, 114) to ascertain a source address and a destination address of said at least one packet,
**characterized by**:
a determining unit for determining whether said source address and said destination address of said at least one packet match addresses within a listing of addresses of devices on said network (106, 114); and
a generating unit for generating a malicious program detection alert upon determining that neither said source address nor said destination address of said at least one packet matches an address within said listing of addresses of devices on said network (106, 114).

7. The system of claim 6, wherein said listing of addresses of devices on said network is comprised of a range of addresses of devices (101-104, 109-112) on said network (106, 114).

8. The system of claim 6, wherein said monitoring unit comprises one or more agents (116, 117) for collecting header information from said at least one packet within said network (106, 114).

9. The system of claim 8, wherein said one or more agents (116, 117) are used in one or more network subnets (106, 114) where packets are monitored, and wherein one of said one or more agents (116, 117) is used in each one of said one or more network subnets (106, 114) where packets are monitored.

10. The system of claim 8, wherein said determining unit comprises a master (115) for comparing said source address and said destination address with the listing of addresses of devices on said network (106, 114)', and said one or more agents (116, 117) are operable to send collected header information to the master (115).

11. A computer recording medium including computer executable code which, when executed by a computer, cause the computer to perform each of the method steps of any one of claims 1 to 5.

## Patentansprüche

1. Verfahren zur Erkennung von Schadprogrammen innerhalb eines Netzwerks (106, 114), umfassend ein Überwachen mindestens eines Pakets innerhalb des Netzwerks (106, 114), um eine Ursprungsadresse und eine Zieladresse des mindestens einen Pakets zu ermitteln, **gekennzeichnet durch**:
Bestimmen, ob die Ursprungsadresse und die Zieladresse des mindestens einen Pakets mit Adressen innerhalb einer Liste von Adressen von Geräten im Netzwerk (106, 114) übereinstimmen; und
Erzeugen einer schadprogrammerkennungswarnung bei Bestimmen, dass weder die Ursprungsadresse noch die Zieladresse des mindestens einen Pakets mit einer Adresse innerhalb der Liste von Adressen von Geräten im Netzwerk (106, 114) übereinstimmen.

2. Verfahren nach Anspruch 1, wobei die Liste von Adressen von Geräten im Netzwerk (106, 114) aus einem Bereich von Adressen von Geräten (101 - 104, 109 - 122) im Netzwerk (106, 114) besteht.

3. Verfahren nach Anspruch 1, wobei das Überwachen des mindestens einen Pakets innerhalb des Netzwerks (106, 114) ein Verwenden von einem oder mehreren Agenten (116, 117) umfasst, um Kopfinformationen aus dem mindestens einen Paket innerhalb des Netzwerks (106, 114) zu sammeln.

4. Verfahren nach Anspruch 3, wobei der eine oder die mehreren Agenten (116, 117) in einem oder mehreren Netzwerk-Teilnetzen (106, 114) verwendet werden, in welchen Pakete überwacht werden, und wobei einer des einen oder der mehreren Agenten (116, 117) in jedem des einen oder der mehreren Netzwerk-Teilnetze (106, 114) verwendet werden, in welchen Pakete überwacht werden.

5. Verfahren nach Anspruch 3, wobei der eine oder die mehreren Agenten (116, 117) gesammelte Kopfinformationen an einen Master (115) senden.

6. System zum Erkennen von schadprogrammen innerhalb eines Netzwerks (106, 114), wobei das System eine Überwachungseinheit zum Überwachen mindestens eines Pakets innerhalb des Netzwerks (106, 114) umfasst, um eine Ursprungsadresse und eine Zieladresse des mindestens einen Pakets zu bestimmen,
**gekennzeichnet durch**:
eine Bestimmungseinheit zum Bestimmen, ob die Ursprungsadresse und die Zieladresse des mindestens einen Pakets mit Adressen innerhalb einer Liste von Adressen von Geräten im Netzwerk (106, 114) übereinstimmen; und
eine Erzeugungseinheit zum Erzeugen einer Schadprogrammerkennungswarnung bei Bestimmen, dass weder die Ursprungsadresse noch die Zieladresse des mindestens einen Pakets mit einer Adresse innerhalb der Liste von Adressen von Geräten im Netzwerk (106, 114) übereinstimmen.

7. System nach Anspruch 6, wobei die Liste von Adressen von Geräten im Netzwerk aus einem Bereich von Adressen von Geräten (101 - 104, 109 - 122) im Netzwerk (106, 114) besteht.

8. System nach Anspruch 6, wobei die überwachungseinheit einen oder mehrere Agenten (116, 117) zum Sammeln von Kopfinformationen aus dem mindestens Einen Paket innerhalb des Netzwerks (106, 114) umfasst.

9. System nach Anspruch 8, wobei der eine oder die mehreren Agenten (116, 117) in einem oder mehreren Netzwerk-Teilnetzen (106, 114) verwendet werden, in welchen Pakete überwacht werden, und wobei einer des einen oder der mehreren Agenten (116, 117) in jedem des einen oder der mehreren Netzwerk-Teilnetze (106, 114) verwendet werden, in welchen Pakete überwacht werden.

10. System nach Anspruch 8, wobei die Bestimmungseinheit einen Master (115) zum Vergleichen der Ursprungsadresse und der zieladresse mit der Liste von Adressen von Geräten im Netzwerk (106, 114) umfasst, und der eine oder die mehreren Agenten (116, 117) so betrieben werden können, dass sie Kopfinformationen an den Master (115) senden.

11. Computeraufzeichnungsmedium, umfassend Code, der auf einem Computer ausgeführt werden kann und der, wenn von einem Computer ausgeführt, den Computer veranlasst, jeden der Verfahrensschritte nach einem der Ansprüche 1 bis 5 auszuführen.

## Revendications

1. Procédé destiné à détecter des programmes malveillants à l'intérieur d'un réseau (106, 114), comprenant une étape consistant à surveiller au moins un paquet à l'intérieur dudit réseau (106, 114) afin d'identifier une adresse source et une adresse de destination dudit au moins un paquet ;
**caractérisé par** les étapes consistant à :
déterminer si ladite adresse source et ladite adresse de destination dudit au moins un paquet correspondent à des adresses à l'intérieur d'un listage d'adresses de dispositifs sur ledit réseau (106, 114) ; et
générer une alerte de détection de programme malveillant lors d'une détermination selon laquelle ni ladite adresse source ni ladite adresse de destination dudit au moins un paquet ne correspondent à une adresse à l'intérieur dudit listage d'adresses de dispositifs sur ledit réseau (106, 114).

2. Procédé selon la revendication 1, dans lequel ledit listage d'adresses de dispositifs sur ledit réseau (106, 114) est composé d'une plage d'adresses de dispositifs (101-104, 109-112) sur ledit réseau (106, 114).

3. Procédé selon la revendication 1, dans lequel l'étape consistant à surveiller ledit au moins un paquet à l'intérieur dudit réseau (106. I 14) comprend une étape consistant à utiliser un ou plusieurs agents (116, 117) pour collecter des informations d'en-tête provenant dudit au moins un paquet à l'intérieur dudit réseau (106, 114).

4. Procédé selon la revendication 3, dans lequel un ou plusieurs agents (116, 117) sont utilisés dans un ou plusieurs sous-réseaux de réseau (106, 114) où des paquets sont surveillés, et dans lequel ledit ou l'un desdits agents (116, 117) est utilisé dans ledit ou dans chacun desdits sous-réscaux de réseau (106, 114) où des paquets sont surveillés.

5. Procédé selon la revendication 3, dans lequel ledit ou lesdits agents (116, 117) envoient les informations d'en-tête collectées à un maître (115).

6. Système destiné à détecter des programmes malveillants à l'intérieur d'un réseau (106, 114), le système comprenant une unité de surveillance pour surveiller au moins un paquet à l'intérieur dudit réseau (106, 114), afin d'identifier une adresse source et une adresse de destination dudit au moins un paquet ;
**caractérisé par** :
une unité de détermination destinée à déterminer si ladite adresse source et ladite adresse de destination dudit au moins un paquet correspondent à des adresses à l'intérieur d'un listage d'adresses de dispositifs sur ledit réseau (106, 114) ; et
une unité de génération destinée à générer une alerte de détection de programme malveillant lors d'une détermination selon laquelle ni ladite adresse source ni ladite adresse de destination dudit au moins un paquet ne correspondent à une adresse à l'intérieur dudit listage d'adresses de dispositifs sur ledit réseau (106, 114).

7. Système selon la revendication 6, dans lequel ledit listage d'adresses de dispositifs sur ledit réseau est composé d'une plage d'adresses de dispositifs (101-104, 109-112) sur ledit réseau (106,114).

8. Système selon la revendication 6, dans lequel ladite unité de surveillance comprend un ou plusieurs agents (116, 117) pour collecter des informations d'entête provenant dudit au moins un paquet à l'intérieur dudit réseau (106, 114).

9. Système selon la revendication 8, dans lequel ledit ou lesdits agents (116, 117) sont utilisés dans un ou plusieurs sous-réseaux de réseau (106, 114) où des paquets sont surveillés, et dans lequel ledit ou l'un desdits agents (116, 117) est utilisé dans ledit ou dans chacun desdits sous-reseaux de réseau (106, 114) où des paquets sont surveillés.

10. Système selon la revendication 8, dans lequel ladite unité de détermination comprend un maître (115) pour comparer ladite adresse source et ladite adresse de destination au listage des adresses des dispositifs sur ledit réseau (106, 114), et ledit ou lesdits agents (116, 117) servent à envoyer des informations d'en-tête collectées au maître (115).

11. Support d'enregistrement informatique comprenant un code exécutable par un ordinateur qui, lorsqu'il est exécuté par un ordinateur, provoque l'exécution par l'ordinateur de chacune des étapes du procédé selon l'une quelconque des revendications 1 à 5.
